# EUROPEAN PATENT APPLICATION

(11) **EP 3 910 652 A1**
(43) Date of publication of application: **17.11.2021**
(21) Application number: 19908821.2
(22) Date of filing: 04.04.2019
(51) Int. Cl.: H01F 27/245, H01F 41/02

(54) **LAMINATED IRON CORE**

(30) Priority: 11.01.2019 JP 2019003683
(71) Applicant: Yoshikawa Kogyo Co., Ltd., Kitakyushu-shi, Fukuoka 805-8501 (JP)
(72) Inventor: SHIMOBE, Yasuo, Kitakyushu-shi, Fukuoka 805-8501 (JP)
(74) Representative: Vossius & Partner Patentanwälte Rechtsanwälte mbB
(86) International application number: PCT/JP2019/014982
(87) International publication number: WO 2020/144877

(57) **Abstract**

Provided is a laminated iron core in which joining failure between adjacent steel sheets thereof is less likely to occur, even if a distance between the adjacent steel sheets (thickness of an adhesive layer) is reduced. 1. The laminated iron core comprises a plurality of steel sheets laminated together while an adhesive layer is interposed between any adjacent two of the steel sheets, wherein the adhesive layer is comprised of a thermosetting resin composition containing an epoxy resin, an amino triazine novolac-based phenolic resin, an acrylic acid ester-based polymer, and inorganic particles having an average particle size of 10 nm to 100 nm, and a maximum particle size of 1 µm or less, and wherein: the content in volume percentage of the inorganic particles in the adhesive layer is from 5 vol% to 30 vol%; the adhesive layer having a Young's modulus of 2 GPa to 6 GPa as measured at 25°C by a nanoindentation technique; and a distance between the adjacent steel sheets being from 0.5 µm to 5 µm.

## Description

### TECHNICAL FIELD

The present invention relates to a laminated iron core used for motors, transformers or the like.

### BACKGROUND ART

Generally, a laminated iron core is produced by sequentially stamping iron core pieces from a steel strip being intermittently conveyed between an upper die and a lower die, and laminating and joining the iron core pieces together. As a method for joining the iron core pieces, there have been known swaging (caulking, crimping), laser welding, adhesive-based joining, and others. In this regard, the below-mentioned Patent Document 1 discloses a specific example of a joining method based on a film-shaped adhesive. Further, as such a film-shaped adhesive, the below-mentioned Patent Document 2 discloses a thermosetting resin composition containing (A) an epoxy resin, (B) an epoxy resin curing agent, and (C) a rubber component, wherein the rubber component (C) is contained in an amount of 40 mass% or more in a solid content of the thermosetting resin composition.

In such a laminated iron core comprising a plurality of steel sheets laminated together while an adhesive layer is interposed between any adjacent two of the steel sheets, it is desired to reduce a distance between the adjacent steel sheets, i.e., the thickness of the adhesive layer, from a viewpoint of improving a magnetic property of the laminated iron core. However, if the thickness of the adhesive layer is reduced, adhesive strength becomes insufficient or Young's modulus becomes higher, thereby leading to a problem that joining failure between the adjacent steel sheets becomes likely to occur.

### CITATION LIST

### [Patent Document]

Patent Document 1: JP-A 2005-191033
Patent Document 2: JP-B 6134497

### SUMMARY OF INVENTION

### [Technical Problem]

A problem to be solved by the present invention is to provide a laminated iron core in which joining failure between adjacent steel sheets thereof is less likely to occur, even if a distance between the adjacent steel sheets (thickness of an adhesive layer) is reduced.

### [Solution to Technical Problem]

Through various researches conducted to solve this problem with a focus on the composition, physical properties, etc., the present inventors have conceived of the present invention.

Specifically, according to one aspect of the present invention, there is provided a laminated iron core comprising a plurality of steel sheets laminated together while an adhesive layer is interposed between any adjacent two of the steel sheets, wherein the adhesive layer is comprised of a thermosetting resin composition containing an epoxy resin, an amino triazine novolac-based phenolic resin, an acrylic acid ester-based polymer, and inorganic particles having an average particle size of 10 nm to 100 nm, and a maximum particle size of 1 µm or less, and wherein: a content in volume percentage of the inorganic particles in the adhesive layer is from 5 vol% to 30 vol%; the adhesive layer having a Young's modulus of 2 GPa to 6GPa as measured at 25°C by a nanoindentation technique; and a distance between the adjacent steel sheets being from 0.5 µm to 5 µm.

### [Effect of Invention]

In the present invention, the composition, physical property, etc., of the adhesive layer are specified as described above, so that it becomes possible to obtain a laminated iron core in which joining failure between adjacent steel sheets thereof is less likely to occur, even if a distance between the adjacent steel sheets (thickness of an adhesive layer) is reduced to be as small as 0.5 µm to 5 µm.

### BRIEF DESCRIPTION OF DRAWINGS

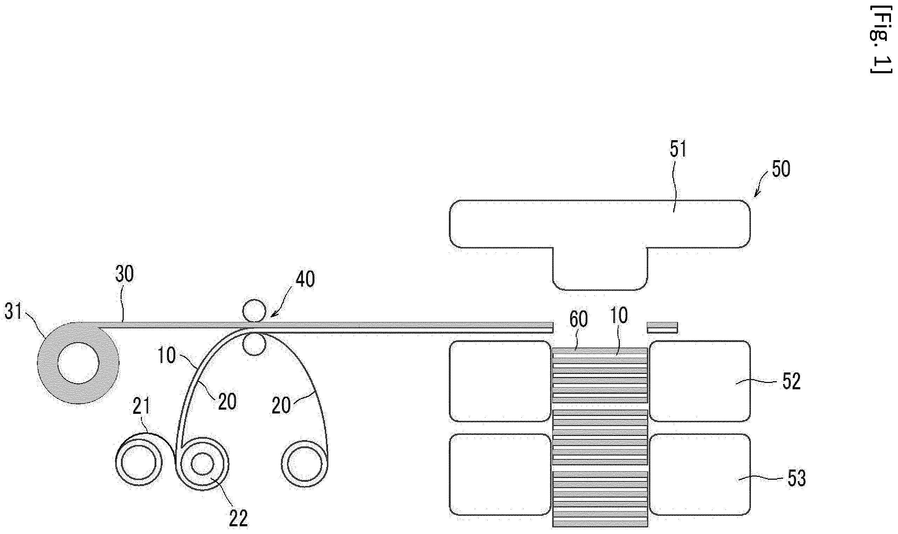

FIG. 1 is a conceptual diagram showing one example of a process for producing a laminated iron core according to the present invention.

### DESCRIPTION OF EMBODIMENTS

A laminated iron core of the present invention comprises a plurality of steel sheets laminated together while an adhesive layer is interposed between any adjacent two of the steel sheets, wherein it is characterized, particularly, by the composition, physical property, etc., of the adhesive layer.

In the laminated iron core of the present invention, the adhesive layer is comprised of a thermosetting resin composition containing an epoxy resin, an amino triazine novolac-based phenolic resin, an acrylic acid ester-based polymer, and inorganic particles having an average particle size of 10 nm to 100 nm, and a maximum particle size of 1 µm or less. Further, a content in volume percentage of the inorganic particles in the adhesive layer is from 5 vol% to 30 vol%. Further, the adhesive layer has a Young's modulus of 2 GPa to 6GPa as measured at 25°C by a nanoindentation technique.

The epoxy resin is a basic component of the thermosetting resin composition, and preferably contains in an amount of 20 mass% to 40 mass% in a solid content of the thermosetting resin composition.

Here, the epoxy resin is a compound having one or more glycidyl groups within a molecule, and a resin in which a three-dimensional mesh structure is formed through a reaction of the one or more glycidyl groups by heat, and thereby cured. Preferably, the glycidyl group is contained in the number of two or more per molecule. This is because, as a result of using a compound containing two or more glycidyl groups per molecule, a curing reaction can be sufficiently progressed, thereby obtaining a cured product having preferred physical properties. Examples of the compound containing two or more glycidyl groups per molecule include, but are not limited to: a bifunctional compound obtained by epoxidizing a bisphenol compound such as bisphenol-A, bisphenol-F or biphenyl, or any derivative thereof, a diol compound having an alicyclic structure, such as hydrogenated bisphenol-A, hydrogenated bisphenol-F, hydrogenated biphenyl, cyclohexanediol, cyclohexanedimethanol or cyclohexanediethanol, or any derivative thereof, an aliphatic diol compound such as butanediol, hexanediol, octanediol, nonanediol or decanediole, or any derivative thereof, or the like; a trifunctional compound having a trihydroxyphenylmethane skeleton or an aminophenol skeleton; and a multifunctional compound obtained by epoxidizing a phenolic novolac resin, a cresol novolac resin, a phenolic aralkyl resin, a biphenyl aralkyl resin, a naphthol aralkyl resin or the like. From a viewpoint of workability, the resin composition preferably exists in liquid form at room temperature. Thus, among the above resins, certain resins capable of maintaining a liquid form at room temperature are preferably used independently or in the form of a mixture. A reactive diluent may be used as is commonly performed. Examples of the reactive diluent include monofunctional aromatic glycidyl ethers and monofunctional aliphatic glycidyl ethers.

The amino triazine novolac-based phenolic resin is contained as an epoxy resin curing agent, and is characterized in that it exhibits good adhesion to metal (steel sheet) because it has a chemical structure of amino triazine. Specifically, considering that adhesive strength (adhesion) tends to deteriorate when the distance between the adjacent steel sheets (thickness of the adhesive layer) is reduced, as mentioned above, the amino triazine novolac-based phenolic resin is contained to improve the tendency. Preferably, the content thereof is from 5 mass % to 30 mass% in the solid content of the thermosetting resin composition.

The acrylic acid ester-based polymer is contained as an elastomer component to adjust the Young's modulus of the adhesive layer. Preferably, the content thereof is from 5 mass % to 35 mass% in the solid content of the thermosetting resin composition.

Here, the acrylic-based elastomer is an acrylic-based polymer using one or more types of acrylic-based monomers as a monomer component. The acrylic-based monomer is preferably a (meth)acrylic acid alkyl ester having a straight-chain or branched-chain alkyl group, and examples thereof include (meth)methyl acrylate, (meth)ethyl acrylate, (meth)propyl acrylate, (meth)butyl acrylate, and (meth)hexyl acrylate.

In a case where the acrylic-based elastomer is a copolymer, a monomeric component copolymerizable with a (meth)acrylic acid alkyl ester is used as the monomer component. As such a monomeric component, a functional group-containing monomer is preferably used, and examples thereof include a monomer containing a carboxyl group such as methacrylic acid or acrylic acid, and a monomer containing a cyano group such as acrylonitrile.

The inorganic particles are contained to allow the thermal expansion coefficient of the adhesive layer to come closer to that of the steel sheets. The content in volume percentage of the inorganic particles in the adhesive layer is set in the range of 5 vol% to 30 vol%. If the content in volume percentage of the inorganic particles is less than 5 vol%, the effect of allowing the thermal expansion coefficient of the adhesive layer to come closer to that of the steel sheets cannot be obtained, and the adhesive strength and Young's modulus decrease, so that joining failure between the adjacent steel sheets becomes likely to occur. On the other hand, if the content in volume percentage of the inorganic particles is greater than 30 vol%, the Young's modulus of the adhesive layer excessively increases, so that stress will be accumulated between the adhesive layer and the steel sheet, which is likely to cause peel-off therebetween. Preferably, the content rate of the inorganic particles in the solid content of the thermosetting resin composition is from 9 mass% to 45 mass%;

Further, in order to reduce the distance between the adjacent steel sheets (thickness of the adhesive layer) to be as small as 0.5 µm to 5 µm, the particle size composition of the inorganic particles is set such that the inorganic particles has an average particle size of 10 nm to 100 nm, and a maximum particle size of 1 µm or less

The content in volume percentage and the particle size composition of the inorganic particles in the adhesive layer can be measured by subjecting an SEM observation image of a cross-section of the laminated iron core (adhesive layer).

The inorganic particles having an average particle size of 10 nm to 100 nm and a maximum particle size of 1 µm or less, to be used in the present invention are not particularly limited as long as the inorganic particles are made of an inorganic material and formed to have an average particle size of 10 nm to 100 nm and a maximum particle size of 1 µm or less. However, it is preferable to use colloidal silica (silica sol) dispersed in an organic solvent, from a viewpoint of dispersibility. In the case where colloidal silica (silica sol) dispersed in an organic solvent is used, it is preferable to use, as the organic solvent, a solvent in which an organic component used in a complex composition is dissolved. Examples of the organic component include alcohols, ketones, esters and glycol ethers. From a viewpoint of being easy to desolventize, it is preferable to use colloidal silica, silica sol or silica fine particles dispersed in: an alcohol-based organic solvent such as methanol, ethanol, isopropyl alcohol, butyl alcohol or n-propyl alcohol; or a ketone-based organic solvent such as methyl ethyl ketone or methyl isobutyl ketone. The colloidal silica (silica sol) or silica fine particles dispersed in the above alcohol-based organic solvent may be a type surface-treated using a coupling agent such as a silane coupling agent or a titanate-based coupling agent, or a dispersing agent such as a surfactant may be used to facilitate dispersion in the organic solvent, to the extent that characteristics required for a motor core or a transformer, such as workability, a distance between adjacent steel sheets, Young's modulus and tensile shear adhesive strength, are not extremely impaired.

In the laminated iron core of the present invention, the adhesive layer has a Young's modulus of 2 GPa to 6GPa as measured at 25°C by a nanoindentation technique. If the Young's modulus is less than 2 GPa, a cohesive force of the adhesive layer decreases, and thus the adhesive strength decreases. On the other hand, if the Young's modulus is greater than 6GPa, stress will be accumulated between the adhesive layer and the steel sheet, which is likely to cause peel-off therebetween. The Young's modulus of the adhesive layer is preferably from 2.5 GPa to 5 GPa, more preferably from 3 GPa to 4 GPa.

In order to allow the Young's modulus of the adhesive layer to fall within the range of 2 GPa to 6GPa, respective content rate of the epoxy resin, the amino triazine novolac-based phenolic resin, the acrylic acid ester-based polymer, and the inorganic particles may be appropriately set, e.g., in the aforementioned preferable ranges.

The measurement of Young's modulus by a nanoindentation technique is standardized as the International Standard ISO 14577.

In the laminated iron core of the present invention, the distance between the adjacent steel sheets (thickness of the adhesive layer) is from 0.5 µm to 5 µm. If the distance between the adjacent steel sheets (thickness of the adhesive layer) is greater than 5 µm, a cross-sectional occupancy rate of the steel sheets decreases, and thus a magnetic property of the laminated iron core deteriorates. On the other hand, the distance between the adjacent steel sheets (thickness of the adhesive layer) is less than 0.5 µm, the adhesive strength decreases, causing difficulty in commercial production. Preferably, the distance between the adjacent steel sheets (thickness of the adhesive layer) is from 0.8 µm to 3 µm.

The distance between the adjacent steel sheets (thickness of the adhesive layer) can be derived by the following formula: (the overall thickness of the laminated iron core - the total thickness of the steel sheets in the laminated iron core) / (the number of the adhesive layers), or can be derived by SEM observation of the cross-section of the laminated iron core (adhesive layer).

Although the type of steel strip is typically a magnetic steel strip, the present invention is not limited thereto. For example, an amorphous alloy thin strip may be used. Further, although the thickness of a steel strip is typically from about 200 to 300 µm in the case of the magnetic steel strip, the present invention is not limited thereto. For example, when including the case of using an amorphous alloy thin strip, it is about 15 to 500 µm.

FIG. 1 conceptually shows one example of a process for producing a laminated iron core according to the present invention.

As shown in FIG. 1, an adhesive 10 comprised of the aforementioned thermosetting resin composition is applied onto a first release film 20 serving as a substrate, and a surface (bonding surface) of the adhesive 10 is covered by a second release film 21, and coiled to prepare an adhesive coil 22. Further, a steel strip 30 is coiled to prepare a steel strip coil 31. Then, through a transfer roll unit 40, the adhesive 10 is transferred onto a lower surface of the steel strip 30 while the bonding surface of the adhesive 10 is heated. In this process, the second release film 21 covering the bonding surface of the adhesive 10 is peeled off before the transfer. Further, the first release film 20 is peeled off after the transfer.

Subsequently, the steel strip 30 having the adhesive 10 on the lower surface thereof is intermittently conveyed between an upper die 51 and a lower die 52 on a die assembly 50 to sequentially stamp iron core pieces (steel sheets) 60 from the steel strip 30, and laminate a plurality of iron core pieces (steel sheets) 60. Subsequently, the laminate of iron core pieces (steel sheets) 60 is moved to pass through a heating tube 53 connected to the lower die 52 to temporarily cure the adhesive 10. Then, the adhesive 10 is finally cured in a non-illustrated heating furnace. In this way, a marinated iron core in which the plurality of steel sheets are laminated together while a layer of the adhesive is interposed between any adjacent two of the steel sheets is obtained.

### EXAMPLES

Components of a thermosetting resin composition as shown in Table 1 were dissolved in a solvent such as cyclohexanone such that a solid content became 30 mass%, thereby obtaining a resin composition varnish. This resin composition varnish was applied onto one surface of a release-treated PET film (thickness: 50 µm) serving as the first release film, by a comma roll coater, to allow the thickness of a resulting resin composition after drying to become the following target value, and then dried through drying at 100°C for 10 minutes. Subsequently, a release-treated PET film (thickness: 50 µm) serving as the second release film was laminated onto a surface (bonding surface) of the resin composition (adhesive) on the PET film, thereby obtaining the adhesive coil 22 as shown in FIG. 1.

Target Thickness after Drying:
Inventive Examples 1 to 3, 5 and 7 to 10, and Comparative Examples 1, 2 and 5 to 9: 2 µm
Inventive Example 4: 0.5 µm
Inventive Example 6: 5 µm
Comparative Example 3: 0.2 µm
Comparative Example 4: 10 µm

A laminated core was produced by the process illustrated in FIG. 1 using the adhesive coil 22 in each Example. Specifically, a magnetic steel strip (thickness: 250 µm) was used as the steel strip 30, and, through the transfer roll unit 40, the adhesive 10 in each Example was transferred onto the lower surface of the steel strip 30 while the bonding surface of the adhesive 10 was heated to 70 to 80°C. Subsequently, an iron core pieces (steel sheets) 60 each having an outer diameter of 200 mm and inner diameter of 40 mm were sequentially stamped within the die assembly 50, and simultaneously two of them were laminated. Then, the laminate was conveyed to pass through the heating tube 53 heated at 70 to 80°C, thereby temporarily cure the adhesive 10. Subsequently, the adhesive 10 was finally cured within a heating oven heated at 150°C, thereby obtaining a laminated iron core.

During the process of producing the laminated iron core, the following workability evaluations were performed.

### < Workability Evaluation (Peel-Off or Breaking of Adhesive)

A sample whose adhesive was neither peeled off from the steel strip nor broken during peel-off of the PET film serving as the first release film from the adhesive was evaluated as good (○), and a sample whose adhesive was peeled off from the steel strip or broken during the peel-off was evaluated as NG (×).

### < Workability Evaluation (Jamming of Stamping Chips)

A sample in which no chip jamming occurred during continuous stamping in the die assembly was evaluated as good (○), a sample in which chip jamming occurred during the continuous stamping was evaluated as NG (×).

Further, with regard to each of the obtained laminated iron cores, the content in volume percentage of the inorganic particles in the adhesive layer, the distance between the adjacent steel sheets, and the Young's modulus of the adhesive layer were measured, respectively, in the following manners.

### < Content in Volume Percentage of Inorganic Particles >

The content in volume percentage of the inorganic particles was measured by subjecting an SEM observation image of the cross-section of the laminated iron core (adhesive layer) to image processing.

### < Distance between Adjacent Steel Sheets >

The distance between the adjacent steel sheets was derived by the following formula: (the overall thickness (actually measured value) of the laminated iron core - the total thickness of the steel sheets in the laminated iron core (calculated value: 250 × 2 = 500 µm) / (the number of the adhesive layers (one)).

### < Young's Modulus >

The steel sheets of the laminated iron core were peeled off from each other, and the Young's modulus of the adhesive layer adhering on one of the steel sheets was measured by the nanoindentation technique (based on International Standard ISO 14577).

Measurement device, measurement condition, etc., are as follows.

Measurement device: ENT-1100a manufactured by Elionix Inc.
Measurement temperature: 25°C
Shape of indenter: Berkovich
Load: 0.98 mN
Loading time: 10000 msec
Analysis conditions
   Poisson ratio of test piece: 0.17
   Poisson ratio of indenter: 0.07
   Young's modulus of indenter: 1140000 N/mm²

Further, with regard to the adhesive obtained from the thermosetting resin composition in each Example, tensile shear adhesive strength was measured in the following manner.

An adhesive on a PET film having a width of 25 mm and a length of 20 mm was laminated onto one surface of a first magnetic steel sheet (thickness: 250 µm) cut from a magnetic steel strip to have a width of 25 mm and a length of 100 mm, while being heated at a temperature of 80°C. Then, after peeling off the PET film, another, second, magnetic steel sheet was attached onto the adhesive on the first magnetic steel sheet. The resulting laminate was clamped by a clip or the like, and the adhesive was finally cured within a heating oven at 150°C, thereby obtaining a test piece. The tensile shear adhesive strength of the obtained test piece was measured using a material strength evaluation tester.

The tester, measurement conditions, etc., are as follows.
Tester: AG-100 kN manufactured by Shimadzu Corporation
Measurement temperature: 25°C, 150°C (25°C: assumed as room temperature, 150°C: assumed as a temperature during use)
Tension rate: 10 cm/min
The number of samples: N = 3 for each temperature

A desired value of the tensile shear adhesive strength was set to a value obtained by dividing the value of yield stress of one magnetic steel sheet (thickness: 250 µm) used in the test piece by a value equivalent to the bonding area (25 mm × 20 mm), specifically, to 8 MPa at 25°C, or 5 MPa at 150°C.

Results of the above evaluations and measurements are shown in Table 1. Further, a product name and manufacturer of each component of the thermosetting resin composition as shown in Table 1 are shown in Table 2.

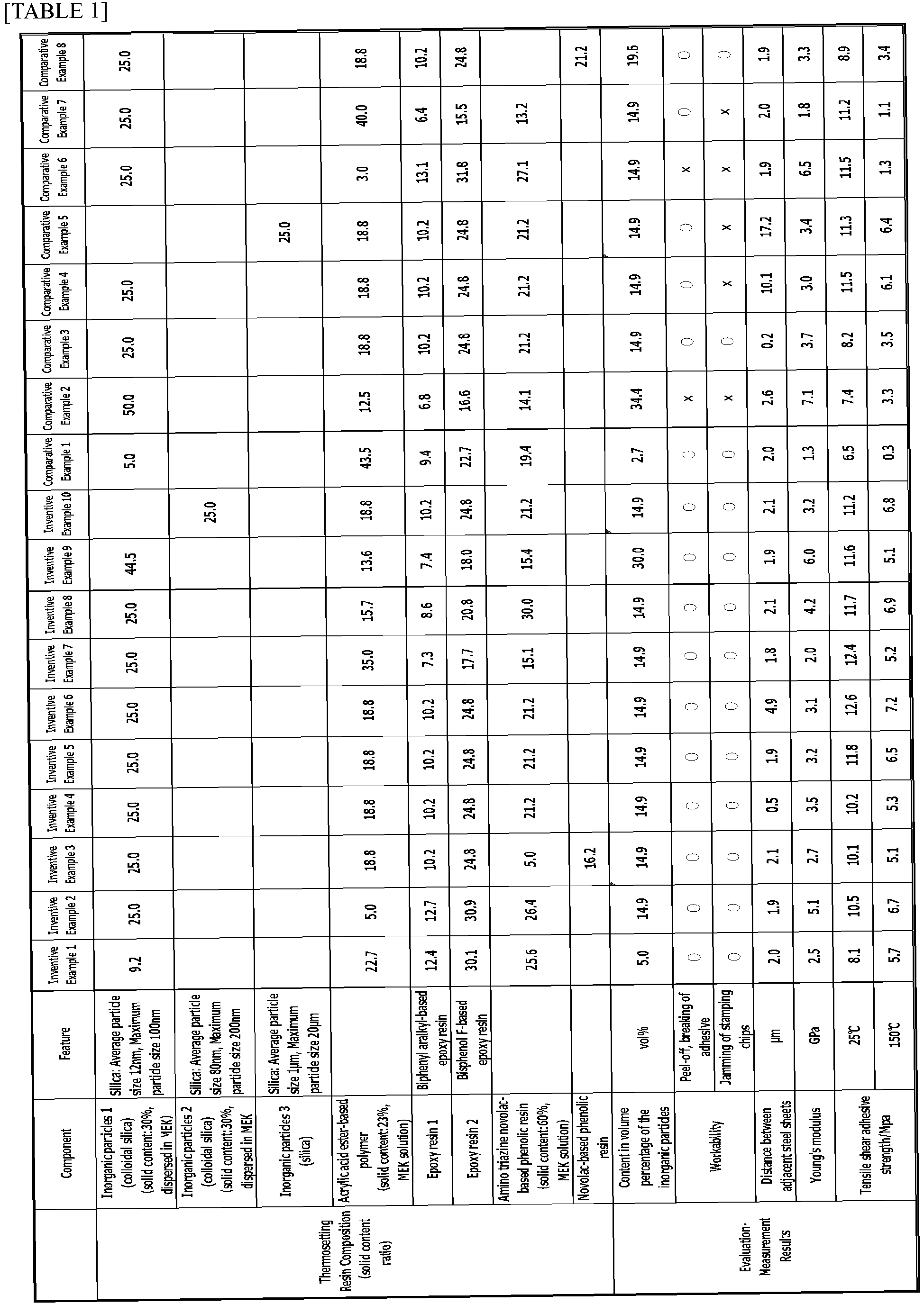

**[TABLE 2]**

| Component | Product Name | Manufacturer |
|---|---|---|
| Inorganic particles 1 (colloidal silica) (solid content:30%, dispersed in MEK) | MEK-ST | Nissan Chemical Corporation |
| Inorganic particles 2 (colloidal silica) (solid content:30%, dispersed in MEK | MEK-ST-ZL | Nissan Chemical Corporation |
| Inorganic particles 3 (silica) | ADMAFINE SE-2100 | Admatechs Co., Ltd. |
| Acrylic acid ester-based polymer (solid content:23%, MEK solution) | TEISAN RESIN SG-280EK23 | Nagase ChemteX Corporation |
| Epoxy resin 1 | NC-3000-H | Nippon Kayaku Co.,Ltd |
| Epoxy resin 2 | EPICLON 830 | DIC Corporation |
| Amino triazine novolac-based phenolic resin (solid content:60%, MEK solution) | PHENOLITE LA-7054 | DIC Corporation |
| Novolac-based phenolic resin | PR-53647 | Sumitomo Bakelite Company Limited |

In Table 1, Inventive Examples 1-10 are examples falling within the scope of the present invention, wherein each of them was good in terms of the workability, and the tensile shear adhesive strength thereof was the desired value or more.

On the other hand, in Comparative Example 1 which is an example where the content in volume percentage of the inorganic particles in the adhesive layer is excessively small, the Young's modulus of the adhesive layer became poor, and thus the tensile shear adhesive strength of the adhesive layer became poor.

In Comparative Example 2 which is an example where the content in volume percentage of the inorganic particles in the adhesive layer is excessively large, the Young's modulus of the adhesive layer became excessively high, and thus the workability was evaluated as NG.

In Comparative Example 3 which is an example where the distance between the adjacent steel sheets is excessively small, the tensile shear adhesive strength at 150°C assumed as a temperature during use became poor.

In Comparative Example 4 which is an example where the distance between the adjacent steel sheets is excessively large, jamming of chips of the adhesive layer during stamping occurred. Moreover, due to a decrease in occupancy rate of the steel sheets, a magnetic property of the laminated iron core naturally became poor.

In Comparative Example 5 which is an example where inorganic particles having an excessively large average particle size and an excessively large maximum particle size are used, an actual thickness of the adhesive layer, i.e., the distance between the adherent steel sheets, was 17.2 µm, although the target thickness of the adhesive layer was 2 µm as described above. Thus, as with Comparative Example 4, jamming of chips of the adhesive layer during stamping occurred. Moreover, due to a decrease in occupancy rate of the steel sheets, the magnetic property of the laminated iron core naturally became poor.

In Comparative Example 6 which is an example where the amount of addition of acrylic acid ester-based polymer which is an elastomer component is reduced and thereby the Young's modulus of the adhesive layer becomes excessively high, the workability was evaluated as NG, as with Comparative Example 2.

In Comparative Example 7 which is an example where the amount of addition of acrylic acid ester-based polymer which is an elastomer component is increased and thereby the Young's modulus of the adhesive layer becomes excessively low, the tensile shear adhesive strength at 150°C assumed as a temperature during use became poor, as with Comparative Example 1.

In Comparative Example 8 which is an example where a novolac-based phenolic resin other than the amino triazine novolac-based phenolic resin is used as an epoxy resin curing agent, the tensile shear adhesive strength at 150°C assumed as a temperature during use became poor

### LIST OF REFERENCE SIGNS

- 10:: adhesive (adhesive layer)
- 20:: first release film
- 21:: second release film
- 22:: adhesive coil
- 30:: steel strip
- 31:: steel strip coil
- 40:: transfer roll unit
- 50:: die assembly
- 51:: upper die
- 52:: lower die
- 53:: heating tube
- 60:: iron core (steel sheet)

## Claims

1. A laminated iron core comprising a plurality of steel sheets laminated together while an adhesive layer is interposed between any adjacent two of the steel sheets, wherein
the adhesive layer is comprised of a thermosetting resin composition containing an epoxy resin, an amino triazine novolac-based phenolic resin, an acrylic acid ester-based polymer, and inorganic particles having an average particle size of 10 nm to 100 nm, and a maximum particle size of 1 µm or less, and wherein:
a content in volume percentage of the inorganic particles in the adhesive layer is from 5 vol% to 30 vol%;
the adhesive layer having a Young's modulus of 2 GPa to 6 GPa as measured at 25°C by a nanoindentation technique; and
a distance between the adjacent steel sheets being from 0.5 µm to 5 µm.
